(19) Europäisches Patentamt
European Patent Office
Office européen des brevets

(11) Veröffentlichungsnummer : **0 376 069 B1**

# (12) EUROPÄISCHE PATENTSCHRIFT

(45) Veröffentlichungstag der Patentschrift :
**13.01.93 Patentblatt 93/02**

(51) Int. Cl.$^5$ : **B01D 71/18,** B01D 71/08

(21) Anmeldenummer : **89123094.8**

(22) Anmeldetag : **14.12.89**

## (54) Biocompatible Dialysemembran aus einem gemischten Polysaccharidester.

(30) Priorität : **20.12.88 DE 3842822**

(43) Veröffentlichungstag der Anmeldung :
**04.07.90 Patentblatt 90/27**

(45) Bekanntmachung des Hinweises auf die Patenterteilung :
**13.01.93 Patentblatt 93/02**

(84) Benannte Vertragsstaaten :
**DE FR IT NL**

(56) Entgegenhaltungen :
**WO-A-88/06476**
**DE-A- 3 044 435**
**FR-A- 2 476 500**
**GB-A- 1 264 670**
**US-A- 3 585 126**

(56) Entgegenhaltungen :
**WPIL, FILE SUPPLIER,JAPANESE PATENTS GAZETTE, Woche D38, 28. Oktober 1981, Sektion Ch: Chemical, AN= 81-68840D, Derwent-Publications Ltd, London, GB**
**WPIL,FILE SUPPLIER, JAPANESE PATENTS GAZETTE, Woche C14, 14. Mai 1980, Sektion Ch: Chemical, AN= 80-24348C, DerwentPublications Ltd, London, GB**

(73) Patentinhaber : **Akzo N.V.**
**Postbus 9300 Velperweg 76**
**NL-6800 SB Arnhem (NL)**

(72) Erfinder : **Diamantoglou, Michael, Dr.**
**Kolpingstrasse 4**
**W-8765 Erlenbach/Main (DE)**
Erfinder : **Tilgner, Hans Georg, Dr.**
**Lübecker Strasse 28**
**W-4330 Mülheim/Ruhr (DE)**

(74) Vertreter : **Fett, Günter**
**Akzo Patente GmbH Kasinostrasse 19 - 23**
**W-5600 Wuppertal 1 (DE)**

EP 0 376 069 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine biocompatible Dialysemembran für die Hämodialyse in Form von Flachfolien, Schlauchfolien oder Hohlfäden aus einem gemischten Polysaccharidester der Essigsäure und/oder der Propionsäure und/oder der Buttersäure.

Gemischte Polysaccharidester sind bereits bekannt und beispielsweise in Kirk Othmer "Encyclopedia of Chemical Technology" 2nd Ed., 1964, Bd. 3, S. 325 ff, ausführlich beschrieben. Sie wurden bisher als thermoplastische Kunststoffe und bei der Herstellung von Lacken eingesetzt.

Aus der JP-A-57-133 211 ist es bekannt, Celluloseester, wie Cellulosedi- bzw. -triacetat, Cellulosepropionat, Cellulosebutyrat, Celluloseacetatpropionat, Celluloseacetatbutyrat, zu Hohlfäden zu verspinnen, die für die Reinigung von Körperflüssigkeiten durch Ultrafiltration und Dialyse geeignet sind. Ihre Verträglichkeit mit Blut wird hervorgehoben.

Die Biocompatibilität von Dialysatoren wird durch zahlreiche Faktoren beeinflußt, von denen nur einer die Membran ist, was bei einer Betrachtung der Biocompatibilität nicht außer acht gelassen werden darf.

Obwohl bereits mehrere Biocompatibilitätsparameter mit klinischer Relevanz diskutiert wurden, bestehen immer noch Unsicherheiten hinsichtlich der Laborwerte. Ein wichtiger Faktor im Rahmen der Beurteilung der Biocompatibilität ist die Thrombogenität. Von cellulosischen Membranen ist deren geringe Thrombogenität bekannt, wohingegen die Thrombogenität bei bekannten Celluloseacetatmembranen ernster beurteilt wird.

Neben dem Umstand, daß Dialysemembranen aus synthetischen bzw. natürlichen Polymeren bei ihrem Einsatz in künstlichen Nieren sehr leicht eine Gerinnung des Blutes hervorrufen können, die durch entsprechende medikamentöse Behandlung weitgehend verhindert wird, tritt bei der Behandlung eines Nierenkranken mit Dialysatoren, die Membranen aus regenerierter Cellulose enthalten in der ersten Zeit der Dialysebehandlung ein vorübergehender Leukozytenabfall auf. Dieser Effekt wird als Leukopenie bezeichnet.

Leukopenie ist eine Erniedrigung der Leukozytenzahl (weiße Blutkörper) im Blutkreislauf. Die Zahl der weißen Blutkörper beim Menschen beträgt ca. 4000 bis 12000 Zellen/$mm^3$.

Die Leukopenie bei der Dialyse ist am stärksten ausgeprägt 15 bis 20 Min. nach Beginn der Behandlung, wobei die Neutrophilen (das sind die mit neutralen oder gleichzeitig mit sauren und basischen Farbstoffen anfärbbaren Leukozyten) fast vollständig verschwinden können. Danach erholt sich die Zahl der Leukozyten innerhalb etwa einer Stunde wieder auf fast den Ausgangswert oder übersteigt diesen.

Wird nach Erholung der Leukozyten ein neuer Dialysator angeschlossen, tritt wieder Leukopenie im gleichen Ausmaß ein.

Cellulose-Membranen verursachen eine ausgeprägte, Celluloseester-Membran eine etwas weniger ausgeprägte Leukopenie. Auch wenn die klinische Bedeutung der Leukopenie wissenschaftlich nicht geklärt ist, besteht doch der Wunsch nach einer Dialysemembran für die Hämodialyse, die den Effekt der Leukopenie nicht zeigt, ohne daß dadurch die anderen sehr erwünschten Eigenschaften von Dialysemembranen beeinträchtigt werden.

Bei der Hämodialyse mittels Membranen aus Cellulose und Celluloseester hat man neben der Leukopenie auch eine deutliche Komplement-Aktivierung festgestellt. Das Komplement-System innerhalb des Blutserums ist ein komplexes, aus vielen Komponenten bestehendes Plasmaenzym-System, das auf verschiedene Weise der Abwehr von Schädigungen durch eindringende fremde Zellen (Bakterien u.a.) dient. Wenn Antikörper gegen den eindringenden Organismus vorhanden sind, kann komplementspezifisch durch den Komplex der Antikörper mit antigenen Strukturen der Fremdzellen aktiviert werden, anderenfalls erfolgt die Komplement-Aktivierung auf einem Alternativ-Weg durch besondere Oberflächenmerkmale der Fremdzellen. Das Komplement-System beruht auf einer Vielzahl von Plasma-Proteinen. Nach Aktivierung reagieren diese Proteine spezifisch in einer bestimmten Reihenfolge miteinander und am Ende wird ein zellschädigender Komplex gebildet, der die Fremdzelle zerstört.

Aus einzelnen Komponenten werden Peptide freigesetzt, die Entzündungserscheinungen auslösen und gelegentlich auch unerwünschte pathologische Folgen für den Organismus haben können. Es wird angenommen, daß die Aktivierung bei Hämodialysemembranen über den alternativen Weg erfolgt. Objektiv festgestellt werden diese Komplement-Aktivierungen durch eine Bestimmung der Komplement-Fragmente C3a und C5a.

In diesem Zusammenhang wird auf folgende Arbeiten hingewiesen: D.E. Chenoweth et al., Kidney International Vol. 24, Seite 764 ff, 1983 und D.E. Chenoweth, Asaio-Journal Vol. 7, Seite 44 ff, 1984.

Da bei den Celluloseestermembranen die Komplementaktivierung, gemessen am $C_{5a}$-Fragment um etwa 50% gegenüber der von regenerierten Cellulosemembranen reduziert ist, hat man bisher Methoden gesucht und gefunden, das $C_{5a}$-Fragment bei Membranen aus regenerierter Cellulose durch gezielte Modifizierung zu reduzieren und dabei $C_{5a}$-Reduktionen bis zu 80% erreicht.

Aufgabe der vorliegenden Erfindung war es, auch bei Membranen aus Polysaccharidestermembranen eine $C_{5a}$-Reduktion von 70% und mehr zu erzielen.

Gelöst wird diese Aufgabe durch eine Dialysemembran, die dadurch gekennzeichnet ist, daß der gemischte Polysaccharidester eine durch die Formel

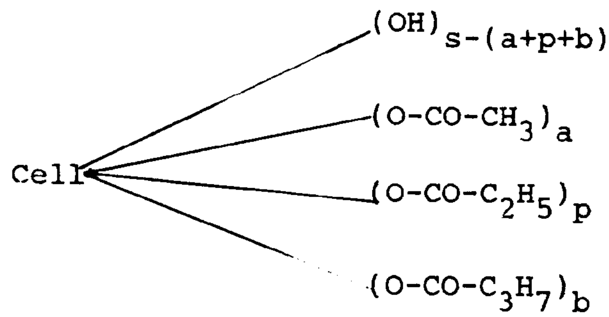

wiedergegebene Struktur aufweist, worin Cell eine Einheit des Polysaccharidmoleküls ohne Hydroxylgruppen bedeutet und worin s der maximale Substitutionsgrad ist und die Bedingungen der Gleichungen

Gl.1) a + p + b = 0,5 . s bis 0,95 . s

Gl.2) p + b = 0,13 . s bis 0,95 . s

Gl.3) a = 0 bis 0,83 . s erfüllt sind,

und b oder p = 0 bis 0,9 . s beträgt und sich p oder b aus den Gleichungen 1 bis 3 ergibt, mit der Maßgabe, daß wenn a = 0 ist, p und b größer als 0 sein müssen und wenn p oder b = 0 ist, a größer als 0 sein muß.

Unter dem maximalen Substitutionsgrad s wird die Anzahl der Hydroxylgruppen verstanden, die einer Substitution zugänglich sind. Bei Chitin ist s = 2 und bei Cellulose ist s = 3. In einer Ausführungsform der Erfindung ist die Dialysemembran dadurch gekennzeichnet, daß der Polysaccharidester ein Ester der Essigsäure und der Buttersäure ist, also in der Strukturformel p = 0 ist, und a = 0,03 . s bis 0,4 . s und b = 0,5 . s bis 0,9 . s beträgt.

In einer anderen Ausführungsform der Erfindung ist die Dialysemembran dadurch gekennzeichnet, daß der Polysaccharidester ein Ester der Essigsäure und der Buttersäure ist, also in der Strukturformel p = 0 ist, und a = 0,5 . s bis 0,8 . s und b = 0,1 . s bis 0,4 . s beträgt.

In einer weiteren Ausführungsform der Erfindung ist die Dialysemembran dadurch gekennzeichnet, daß der Polysaccharidester ein Ester der Essigsäure und der Propionsäure ist, also in der Strukturformel b = 0 ist, und a = 0,02 . s bis 0,35 . s und p = 0,4 . s bis 0,9 . s beträgt.

In einer anderen Ausführungsform der Erfindung ist die Dialysemembran dadurch gekennzeichnet, daß der Polysaccharidester ein Ester der Essigsäure und der Propionsäure ist, also in der Strukturformel b = 0 ist, und a = 0,4 . s bis 0,7 . s und p = 0,15 . s bis 0,45 . s beträgt.

In einer weiteren Ausführungsform der Erfindung ist die Dialysemembran dadurch gekennzeichnet, daß der Polysaccharidester ein Ester der Essigsäure und der Propionsäure und der Buttersäure ist und in der Strukturformel

a = 0,02 . s bis 0,5 . s

p = 0,15 . s bis 0,6 . s

b = 0,10 . s bis 0,5 . s

Bevorzugte Dialysemembranen gemäß der Erfindung ergeben sich daraus, daß sie dadurch hergestellt sind, daß Lösungen des Polysaccharidesters in einem Lösungsmittel zu einer Folie oder Schlauchfolie oder zu einem Hohlfaden verformt und in einem Fällbad ausgefällt werden.

In einer Ausführungsform der Erfindung sind aprotische Lösungsmittel wie Ketone, DMF, DMSO, DMAc, DMAc/LiCl oder NMP/LiCl bevorzugt.

In einer anderen Ausführungsform der Erfindung sind als Lösungsmittel Ameisensäure und/oder Essigsäure, gegebenenfalls unter Zusatz von Polyethylenglykol (PEG) und Wasser bevorzugt.

Die hervorragende Biocompatibilität der erfindungsgemäßen Dialysemembran wird auch erzielt, wenn sie 1 - 50 Gew.-%, bezogen auf das Gesamtgemisch der Membran, eines im verwendeten Lösungsmittel löslichen weiteren Polymeren enthalten. Als solche Polymere sind Chitin und/oder Polyacrylnitril (PAN) und/oder ein Polyamid bevorzugt. Die genannten Polymeren können gegebenenfalls chemisch modifiziert sein.

Im Rahmen der vorliegenden Erfindung wurde die Komplement-Aktivierung anhand des Fragmentes C5a beurteilt. Dazu wurden in vitro 300 ml heparinisiertes Blutplasma über einen Zeitraum von 4 Std. mit einem Plasmafluß von 100 ml/min durch einen Dialysator mit 1 $m^2$ effektiver Austauschfläche rezirkuliert. Im Plasma wurden die C5a-Fragmente mit Hilfe der RIA-Methode (Upjohn-Test) bestimmt. Die relative Komplement-Aktivierung für den jeweiligen Meßzeitpunkt wurde durch Bildung des Verhältnisses der Konzentration zum Zeitpunkt der Probenahme mit dem Anfangswert in Prozent errechnet. Zur Bewertung wurde der Meßwert nach 4 Std. Rezirkulationszeit herangezogen. Flachmembranen werden mit heparinisiertem Blutplasma 3 Stunden inkubiert und anschließend die C5a-Fragmente bestimmt.

Beispiel 1

Durch Umsetzung von Cellulose mit Essigsäureanhydrid und Propionsäureanhydrid nach bekannter Verfahrensweise (vgl. Kirk-Othmer, "Encyclopedia of Chemical Technology" 2nd Ed., 1964 Bd. 3, S. 332 ff) wurde ein Cellulosemischester mit einem Acetylgruppen-Gehalt von a = 1,36 und einem Propionylgruppen-Gehalt von p = 0,98 erhalten.

Der Mischester wurde in einem Gemisch von Ameisensäure, Polyethylenglykol 400 und Wasser (78:15:7) gelöst und zu Flachmembranen verarbeitet.

Die erhaltenen Cellulosemischester-Membranen weisen im Vergleich zu unmodifizierten Cellulosemembranen keine Komplementaktivierung auf. Gegenüber der unmodifizierten Cellulosemembran beträgt die $C_{5a}$-Reduzierung 100%.

Beispiel 2

Durch Umsetzung von Cellulose mit Essigsäureanhydrid und Propion-säureanhydrid nach bekannter Verfahrensweise wurde Cellulose-0,20-essigsäure-2,0-propionsäure-Ester synthetisiert. Dieser wurde mit Cellulose-2,5-acetat vermischt, in einem Gemisch von Ameisensäure, Polyethylenglykol 400 und Wasser (74:18:8) gelöst und zu Flachmembranen verarbeitet. Die Membranen weisen folgende Spezifikationen auf:

Acetylgruppen-Gehalt : a = 1,94
Propionylgruppen-Gehalt: p = 0,48

Gegenüber der unmodifizierten Cellulosemembran beträgt die $C_{5a}$-Reduktion 98%.

Beispiel 3

Durch Umsetzung von Cellulose mit Essigsäureanhydrid und Buttersäureanhydrid nach bekannter Verfahrensweise wurde ein Cellulose-mischester mit einem Acetylgruppen-Gehalt von a = 2,10 und einem Butyrylgruppen-Gehalt von b = 0,75 synthetisiert.

Der Mischester wurde in einem Gemisch von Ameisensäure, Polyethylenglykol 400 und Wasser (74:18:8) gelöst und zu Flachmembranen verarbeitet. Gegenüber der unmodifizierten Cellulosemembran beträgt die $C_{5a}$-Reduzierung 95%.

Beispiel 4

Durch Umsetzung von Cellulose mit Essigsäureanhydrid und Buttersäureanhydrid nach üblicher Verfahrensweise wurde Cellulose-0,25-acetat-2,40-butyrat hergestellt. Der Ester wurde in Dimethylacetamid gelöst und zu Flachmembranen verarbeitet. Gegenüber der unmodifizierten Cellulosemembran beträgt die $C_{5a}$-Reduktion 100%.

Beispiele 5 - 13

Analog den Beispielen 1 bis 4 wurden die in der Tabelle 1 aufgeführten Cellulosederivate hergestellt, zu Flachmembranen verarbeitet und ihre Komplementaktivierung untersucht.

Tabelle 1

| Beispiel Nr. | a | p | b | % $C_{5a}$-Red. |
|---|---|---|---|---|
| 5 | 1,98 | 0,56 | 0 | 85 |
| 6 | 1,43 | 1,17 | 0 | 80 |
| 7 | 0,35 | 0 | 2,60 | 97 |
| 8 | 0,15 | 0 | 2,10 | 90 |
| 9 | 0,98 | 0 | 1,69 | 80 |
| 10 | 2.03 | 0 | 0,51 | 85 |
| 11 | 2,17 | 0 | 0,37 | 76 |
| 12 | 1,10 | 1,08 | 0,36 | 92 |
| 13 | 0 | 1,95 | 0,45 | 98 |

Beispiel 14

Nach bekannten Verfahren hergestelltes Cellulose-1,4-acetat-0,95-propionat wurde mit Polyacrylnitril (50:50) vermischt, in einem Gemisch von Dimethylacetamid und Lithiumchlorid (93:7) gelöst und zu Flachmembranen verarbeitet. Gegenüber der unmodifizierten Cellulosemembran beträgt die $C_{5a}$-Reduktion 100%.

Beispiel 15

Ein Gemisch von Cellulose-1,94-acetat-0,48-propionat und Chitin (50:50) wurde in Dimethylacetamid/Lithiumchlorid gelöst und zu Flachmembranen verabeitet. Gegenüber der unmodifizierten Cellulosemembran beträgt die $C_{5a}$-Reduktion 97%.

**Patentansprüche**

1. Biocompatible Dialysemembran für die Hämodialyse in Form von Flachfolien, Schlauchfolien oder Hohlfäden aus gemischten Polysaccharidestern der Essigsäure und/oder Propionsäure und/oder Buttersäure, dadurch gekennzeichnet, daß der gemischte Polysaccharidester eine durch die Formel

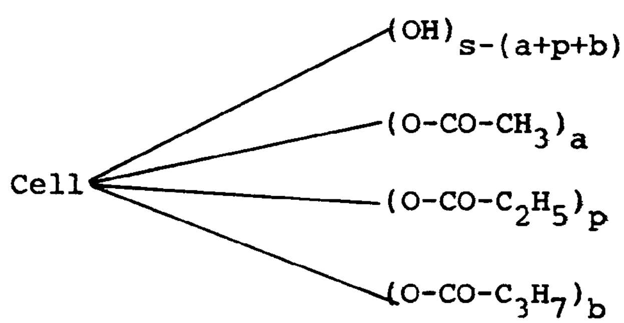

wiedergegebene Struktur aufweist, worin Cell eine Einheit des Polysaccharidmoleküls ohne Hydroxylgruppen bedeutet und worin s der maximale Substitutionsgrad ist und die Bedingungen der Gleichungen

Gl.1) a + p + b = 0,5 . s bis 0,95 . s
Gl.2) p + b = 0,13 . s bis 0,95 . s
Gl.3) a = 0 bis 0,83 . s erfüllt sind,
und b oder p = 0 bis 0,9 . s beträgt und sich p oder b aus den Gleichungen 1 bis 3 ergibt, mit der Maßgabe, daß wenn a = 0 ist, p und b größer als 0 sein müssen und wenn p oder b = 0 ist, a größer als 0 sein muß.

2. Biocompatible Dialysemembran nach Anspruch 1, dadurch gekennzeichnet, daß der Polysaccharidester ein Ester der Essigsäure und der Buttersäure ist, also in der Strukturformel p = 0 ist, und a = 0,03 . s bis 0,4 . s und b = 0,5 . s bis 0,9 . s beträgt.

3. Biocompatible Dialysemembran nach Anspruch 1, dadurch gekennzeichnet, daß der Polysaccharidester ein Ester der Essigsäure und der Buttersäure ist, also in der Strukturformel p = 0 ist, und a = 0,5 . s bis 0,8 . s und b = 0,1 . s bis 0,4 . s beträgt.

4. Biocompatible Dialysemembran nach Anspruch 1, dadurch gekennzeichnet, daß der Polysaccharidester ein Ester der Essigsäure und der Propionsäure ist, also in der Strukturformel b = 0 ist, und a = 0,02 . s bis 0,35 . s und p = 0,4 . s bis 0,9 . s beträgt.

5. Biocompatible Dialysemembran nach Anspruch 1, dadurch gekennzeichnet, daß der Polysaccharidester ein Ester der Essigsäure und der Propionsäure ist, also in der Strukturformel b = 0 ist, und a = 0,4 . s bis 0,7 . s und p = 0,15 . s bis 0,45 . s beträgt.

6. Biocompatible Dialysemembran nach Anspruch 1, dadurch gekennzeichnet, daß der Polysaccharidester ein Ester der Essigsäure und der Propionsäure und der Buttersäure ist und in der Strukturformel
a = 0,02 . s bis 0,5 . s
p = 0,15 . s bis 0,6 . s
b = 0,10 . s bis 0,5 . s

7. Biocompatible Dialysemembran nach einem der Ansprüche 1 bis 6, dadurch gekennzeichnet, daß sie dadurch hergestellt ist, daß Lösungen des Polysaccharidesters in einem Lösungsmittel zu einer Folie oder Schlauchfolie oder zu einem Hohlfaden verformt und in einem Fällbad ausgefällt werden.

8. Biocompatible Dialysemembran nach Anspruch 7, dadurch gekennzeichnet, daß als Lösungsmittel ein aprotisches Lösungsmittel wie Ketone, DMF, DMSO, DMAc, DMAc/LiCl oder NMP/LiCl verwendet wird.

9. Biocompatible Dialysemembran nach Anspruch 7, dadurch gekennzeichnet, daß als Lösungsmittel Ameisensäure und/oder Essigsäure, gegebenenfalls unter Zusatz von PEG und Wasser, verwendet wird.

10. Biocompatible Dialysemembran nach den Ansprüchen 7 bis 9, dadurch gekennzeichnet, daß sie 1 - 50 Gew.%, bezogen auf das Gesamtgewicht der Membran, eines im verwendeten Lösungsmittel löslichen Polymeren enthalten.

11. Biocompatible Dialysemembran nach dem Anspruch 10, dadurch gekennzeichnet, daß das Polymer Chitin und/oder PAN und/oder ein Polyamid, gegebenenfalls modifiziert, ist.

## Claims

1. Biocompatible dialysis membrane for haemodialysis in the form of flat films, tubular films or hollow threads of mixed polysaccharide esters of acetic acid and/or propionic acid and/or butyric acid, characterised in that the mixed polysaccharide ester has a structure corresponding to the following formula

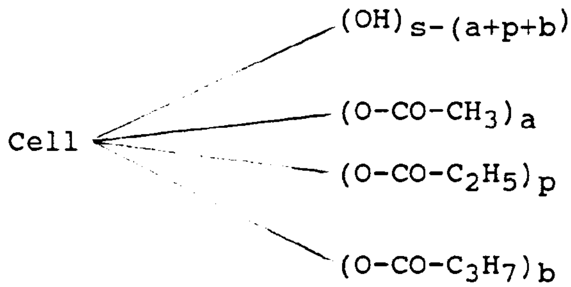

wherein Cell denotes a unit of the polysaccharide molecule without hydroxyl groups and wherein s is the maximum degree of substitution and the conditions of the following equations are fulfilled:

G1.1) a + p + b = 0,5 . s to 0.95 . s

G1.2) p + b = 0.13 . s to 0.95 . s

G1.3) a = 0 to 0.83 . s and

b or p = 0 to 0.9 . s and the value of p or b is obtained from equations 1 to 3, under the condition that when a = 0, p and b are greater than 0 and when p or b = 0, a is greater than 0.

**2.** Biocompatible dialysis membrane according to Claim 1, characterised in that the polysaccharide ester is an ester of acetic acid and butyric acid, i.e. in the structural formula, p = 0 and a = 0.03 . s to 0.4 . s and b = 0.5 . s to 0.9 . s.

**3.** Biocompatible dialysis membrane according to Claim 1, characterised in that the polysaccharide ester is an ester of acetic acid and butyric acid, i.e. in the structural formula, p = 0 and a = 0.5 . s to 0.8 . s and b = 0.1 . s to 0.14 . s.

**4.** Biocompatible dialysis membrane according to Claim 1, characterised in that the polysaccharide ester is an ester of acetic acid and propionic acid, i.e. in the structural formula, b = 0 and a = 0.02 . s to 0.35 . s and p = 0.4 . s to 0.9 . s.

**5.** Biocompatible dialysis membrane according to Claim 1, characterised in that the polysaccharide ester is an ester of acetic acid and propionic acid, i.e. in the structural formula, b = 0 and a = 0.4 . s to 0.7 . s and p = 0.15 . s to 0.45 . s.

**6.** Biocompatible dialysis membrane according to Claim 1, characterised in that the polysaccharide ester is an ester of acetic acid and propionic acid and butyric acid and in the structural formula,

a = 0.02 . s to 0.5 . s

p = 0.15 . s to 0.6 . s

b = 0.10 . s to 0.5 . s.

**7.** Biocompatible dialysis membrane according to one of the Claims 1 to 6, characterised in that it is prepared by moulding solutions of the polysaccharide ester in a solvent to form a film or tubular film or a hollow thread and precipitating them in a precipitating bath.

**8.** Biocompatible dialysis membrane according to Claim 7, characterised in that the solvent used is an aprotic solvent such as ketones, DMF, DMSO, DMAc, DMAc/LiCl or NMP/LiCl.

**9.** Biocompatible dialysis membrane according to Claim 7, characterised in that the solvent used is formic acid and/or acetic acid, optionally with the addition of PEG and water.

**10.** Biocompatible dialysis membrane according to Claims 7 to 9, characterised in that they contain from 1 to 50% by weight, based on the total weight of the membrane, of a polymer soluble in the solvent used.

**11.** Biocompatible dialysis membrane according to Claim 10, characterised in that the polymer is chitin and/or PAN and/or a polyamide, optionally modified.

## Revendications

1. Membrane de dialyse biocompatible pour l'hémodialyse, sous forme de feuilles planes, de feuilles tubulaires ou de fibres creuses, en esters mixtes de polysaccharides et d'acide acétique et/ou propionique et/ou butyrique, caractérisée en ce que l'ester mixte de polysaccharide possède une structure représentée par la formule :

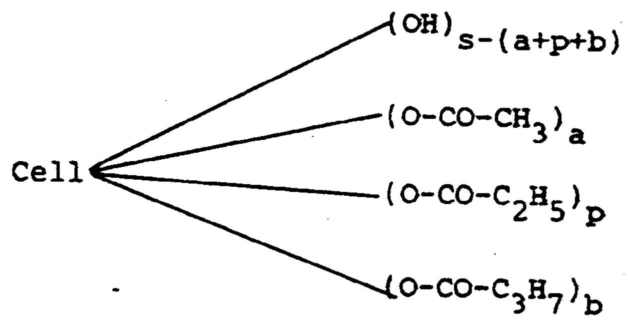

dans laquelle :

Cell représente un motif moléculaire de polysaccharide sans groupe hydroxyle, et

s est le degré maximal de substitution, les conditions exprimées par les équations suivantes étant remplies :

1) a + p + b = 0,5 s à 0,95 s
2) p + b = 0,13 à 0,95 s
3) a = 0 à 0,83 s

b ou p valant de 0 à 0,9 s et les valeurs de p ou b étant données par les équations 1 à 3, avec la condition que, si a vaut 0, p et b doivent être supérieurs à 0 et si p ou b vaut 0, a doit être supérieur à 0.

2. Membrane de dialyse biocompatible conforme à la revendication 1, caractérisée en ce que l'ester de polysaccharide est un ester d'acide acétique et d'acide butyrique, et que par conséquent, dans la formule structurale, p vaut 0, et en ce que a vaut de 0,03 s à 0,4 s et que b vaut de 0,5 s à 0,9 s.

3. Membrane de dialyse biocompatible conforme à la revendication 1, caractérisée en ce que l'ester de polysaccharide est un ester d'acide acétique et d'acide butyrique, et que par conséquent, dans la formule structurale, p vaut 0, et en ce que a vaut de 0,5 s à 0,8 s et que b vaut de 0,1 s à 0,4 s.

4. Membrane de dialyse biocompatible conforme à la revendication 1, caractérisée en ce que l'ester de polysaccharide est un ester d'acide acétique et d'acide propionique, et que par conséquent, dans la formule structurale, b vaut 0, et en ce que a vaut de 0,02 s à 0,35 s et que p vaut de 0,4 s à 0,9 s.

5. Membrane de dialyse biocompatible conforme à la revendication 1, caractérisée en ce que l'ester de polysaccharide est un ester d'acide acétique et d'acide propionique, et que par conséquent, dans la formule structurale, b vaut 0, et en ce que a vaut de 0,4 s à 0,7 s et que p vaut de 0,15 s à 0,45 s.

6. Membrane de dialyse biocompatible conforme à la revendication 1, caractérisée en ce que l'ester de polysaccharide est un ester d'acide acétique, d'acide propionique et d'acide butyrique, et en ce que, dans la formule structurale:

a = 0,02 s à 0,5 s
p = 0,15 s à 0,6 s
b = 0,10 s à 0,5 s.

7. Membrane de dialyse biocompatible conforme à l'une des revendications 1 à 6, caractérisée en ce qu'on la prépare en mettant des solutions d'ester de polysaccharide dans un solvant en forme de feuille, de feuille tubulaire ou de fibre creuse, et en soumettant ces solutions à une précipitation dans un bain de précipitation.

8. Membrane de dialyse biocompatible conforme à la revendication 7, caractérisée en ce que l'on utilise comme solvant un solvant aprotique comme des cétones, DMF, DMSO, DMAc, DMAc/LiCl ou NMP/CiCl.

**9.** Membrane de dialyse biocompatible conforme à la revendication 7, caractérisée en ce que l'on utilise comme solvant de l'acide formique et/ou de l'acide acétique, avec addition éventuelle de PEG et d'eau.

**10.** Membrane de dialyse biocompatible conforme aux revendications 7 à 9, caractérisée en ce qu'elle contient de 1 à 50 % en poids, par rapport au poids total de la membrane, d'un polymère soluble dans le solvant utilisé.

**11.** Membrane de dialyse biocompatible conforme à la revendication 7, caractérisée en ce que le polymère est de la chitine et/ou du PAN et/ou un polyamide, éventuellement modifié.